# EUROPÄISCHE PATENTSCHRIFT

(11) **EP 1 526 002 B1**
(45) Veröffentlichungstag und Bekanntmachung des Hinweises auf die Patenterteilung: **12.09.2007**
(21) Anmeldenummer: 04103474.5
(22) Anmeldetag: 21.07.2004
(51) Int. Cl.: B60C 1/00, C08L 9/00

(54) **Fahrzeugluftreifen**
Pneumatic vehicle tyre
Pneumatique pour véhicules

(30) Priorität: 23.10.2003 DE 10349292
(43) Veröffentlichungstag der Anmeldung: 27.04.2005
(73) Patentinhaber: Continental Aktiengesellschaft, 30165 Hannover (DE)
(72) Erfinder: Weinreich, Hajo, 31840 Hessisch Oldendorf (DE)

(56) Entgegenhaltungen:
- EP-A- 0 592 218
- EP-A- 0 716 120
- EP-A- 0 738 613
- EP-A- 0 900 826
- EP-A- 1 277 795

## Beschreibung

Die Erfindung betrifft einen Fahrzeugluftreifen mit einem Laufstreifen mit Cap- und Base-Aufbau, wobei die Laufstreifenbase aus zumindest einer mit Schwefel vulkanisierten Kautschukmischung besteht.

Der Laufstreifen eines Reifens kann aus einer einzigen Mischung gefertigt werden. Heutzutage ist es allerdings üblich, den Laufstreifen von Fahrzeugluftreifen aus zumindest zwei Mischungen, einer so genannten Cap- und einer Basemischung zu fertigen. Die Cap steht im fertigen Reifen mit der Fahrbahn in Berührung, während die Base (auch Unterplatte genannt) als dünne Platte unterhalb der Cap zwischen Cap und Gürtel angeordnet ist. Die Mischung für die Cap soll bei Fahrzeugluftreifen, die im herkömmlichen Straßenbetrieb eingesetzt werden, in erster Linie eine gute Haftung (Traktion) auf allen Fahrbahnoberflächen bei geringem Abrieb bewirken, während die Mischung für die Base vor allem zum Fahrkomfort, zu gutem Handling, zu hoher Haltbarkeit und zu niedrigem Rollwiderstand beitragen soll.

Damit eine Kautschukmischung für die Laufstreifenbase diesen Anforderungen gerecht wird, sollte sie im vulkanisierten Zustand einen hohen statischen und dynamischen Modul für gutes Handling und eine geringen Wärmeaufbau für hohe Haltbarkeit aufweisen. Außerdem müssen Basemischungen eine zufriedenstellende Grünklebrigkeit zur besseren Haftung und Verschweißung der einzelnen Aufbauteile während des Konfektionierprozesses zeigen.

Um die Grünklebrigkeit einer Kautschukmischung zu beeinflussen, ist es bekannt, verschiedenste Harze zuzusetzen. Diese Harze haben durch ihre Erweichung allerdings einen negativen Einfluss sowohl auf den Heat Build-Up als auch auf den statischen und dynamischen Modul der Vulkanisate, was sich bei Einsatz als Basemischung negativ auf die Reifeneigenschaften wie z. B. das Handling auswirken kann.

In der EP 1 075 967 B1 werden Reifenlaufflächen mit 6 - 30 phr zumindest drei verschiedener Harzen mit unterschiedlichen Erweichungspunkten zwischen 20 und 110 °C beschrieben, die eine hohe Traktion über eine weiten Temperaturbereich aufweisen sollen; Nachteile in Rollwiderstand und Abrieb werden hingenommen. Die Laufflächen stehen demnach mit der Fahrbahn in Berührung, da sie für die Traktion verantwortlich sind. Es handelt sich um Laufflächen, die aus einer einzigen Mischung aufgebaut sind und keinen Cap- und Base-Aufbau aufweisen. Derartige Reifenlaufflächen werden hauptsächlich im Hochgeschwindigkeitsbereich, also bei Rennreifen, eingesetzt. Die in der EP 1 075 967 B1 beschriebenen Mischungen sind keinesfalls für den Einsatz als Basemischung für den herkömmlichen Straßenbetrieb geeignet, da die Mischungen einen sehr hohen Heat Build-Up aufweisen, der bei Einsatz als Base die dynamische Haltbarkeit des Reifens stark herabsetzen würde. Die hohe Dämpfung der Mischung (E' und tan δ) würde sich negativ auf den Rollwiderstand auswirken und das Handling wäre durch die weichen Mischungen als Base ebenfalls stark verschlechtert.

Kautschukmischungen für die Laufstreifenbase werden z. B. in der EP 1 277 795 A2, der EP 0 900 826 A1, der EP 0 738 613 A1, der EP 0 592 218 A1 und der EP 0 716 120 A1 beschrieben, wobei die in diesen Schriften genannten Mischungen Stearinsäure enthalten. In der EP 1 277 795 A2 wird außerdem für gute Stabilität und Kontrollierbarkeit auf nasser Straße vorgeschlagen, dass die Mischung für die Laufstreifenbase zumindest 20 phr Weichmacher enthält, wobei der Weichmacher 5 bis 55 Gew.-Teile eines Weichmacherharzes mit einem Erweichungspunkt von 35 bis 150 °C aufweisen soll. Die in der EP 1 277 795 A2 genannten Mischungen enthalten allesamt 10 oder mehr phr des speziellen Weichmacherharzes.

Der vorliegenden Erfindung liegt nun die Aufgabe zugrunde, Fahrzeugluftreifen bereitzustellen, die sich gut konfektionieren lassen und die sich durch gutes Handling und hohe Haltbarkeit auszeichnen. Für das gute Handling weisen die Vulkanisate der Kautschukmischungen für die Laufflächenbase einen guten statischen und dynamischen Modul, für gute Haltbarkeit einen geringen Heat Build-Up auf.

Gelöst wird diese Aufgabe erfindungsgemäß dadurch, dass die Laufstreifenbase aus zumindest einer mit Schwefel vulkanisierten Kautschukmischung besteht, die
- zumindest einen Dienkautschuk,
- zumindest einen Füllstoff,
- 1-4 phr (Gewichtsteile, bezogen auf 100 Gewichtsteile der gesamten Kautschuke in der Mischung) zumindest eines aromatischen Kohlenwasserstoffharzes mit einem Erweichungspunkt (Ring und Kugel gemäßASTM E 28) zwischen 85 und 115 °C und
- 1,5 -10 phr zumindest einer Fettsäure und/oder eines Metallsalzes einer Fettsäure und/oder eines Fettsäurederivates enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die spezielle Kombination von 1 - 4 phr zumindest eines aromatischen Kohlenwasserstoffharzes mit einem Erweichungspunkt zwischen 85 und 115 °C mit 1,5 - 10 phr zumindest einer Fettsäure und/oder eines Metallsalzes einer Fettsäure und/oder eines Fettsäurederivates - also hohen Mengen an Fettsäure, Metallsalz einer Fettsäure oder Fettsäurederivat - in gefüllten Dienkautschukmischungen für die Laufstreifenbase der Zielkonflikt zwischen guter Grünklebrigkeit, hohem statischen Modul und geringem Heat Build-Up gelöst werden kann.

Als aromatische Kohlenwasserstoffharze können alle dem Fachmann bekannten Harze mit dem entsprechenden Erweichungspunkt eingesetzt werden. Es kann z. B. ein aromatisches Kohlenwasserstoffharz wie Norsolene^{®}, der Firma Sartomer, USA, eingesetzt werden.

Die Kautschukmischung kann neben dem Kohlenwasserstoffharz mit einem Erweichungspunkt zwischen 85 und 115 °C auch noch andere Harze mit einem höheren oder niedrigeren Erweichungspunkt enthalten. Die Harze können je nach den gewünschten Eigenschaften miteinander kombiniert werden.

Die Kautschukmischung für die Laufstreifenbase enthält 1,5 - 10 phr, vorzugsweise 2 - 4 phr, zumindest einer Fettsäure, z. B. Stearinsäure oder Palmitinsäure, und/oder eines Metallsalzes einer Fettsäure, z. B. Zinkstearat, und/oder eines Fettsäurederivates, z. B. Fettsäureester oder -alkohole. Fettsäure, Metallsalze der Fettsäure und Fettsäurederivate sind in der Kautschukindustrie bekannt als Vulkanisationsaktivatoren, zum Senken der Mischungsviskosität und zum Verbessern der Dispersion der Ingredienzen. Bevorzugt wird als preisgünstige und gut wirksame Fettsäure Stearinsäure eingesetzt.

Die schwefelvemetzbare Kautschukmischung für die Laufstreifenbase enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der Kautschukmischung verarbeiten und ergeben in den vulkanisierten Reifen gute Reifeneigenschaften.

Die Kautschukmischung für die Laufstreifenbase kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-%, und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung für die Laufstreifenbase aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Kautschukmischung für die Laufstreifenbase enthält zumindest einen Füllstoff. Als Füllstoffe können alle dem Fachmann bekannten Füllstoffe, wie z. B. Ruß, Kieselsäure, Aluminiumhydroxid, Schichtsilikate, Kreide, Stärke, Magnesiumoxid, Titandioxid, Kautschukgele usw., in beliebigen Kombinationen in Gesamtfüllstoffmengen bis zu 150 phr verwendet werden.

Zur Verbesserung der Verarbeitbarkeit und zur Anbindung von Füllstoffen, wie beispielsweise Kieselsäure, an den Dienkautschuk können Kupplungsagenzien, z. B. Silan-Kupplungsagenzien, in üblichen Mengen in den Kautschukmischungen eingesetzt werden.

Des Weiteren kann die erfindungsgemäße Kautschukmischung übliche Zusatzstoffe in üblichen Gewichtsteilen enthalten. Zu diesen Zusatzstoffen zählen Weichmacher, Aktivatoren, Wachse, Mastikationshilfsmittel, Alterungsschutzmittel, wie z. B. N-(1,3-Dimethylbutyl)-N'-phenyl-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind.

Gemäß einer vorteilhaften Weiterbildung der Erfindung enthält die Kautschukmischung mehr als 2 phr zumindest eines Alterungsschutzmittels ausgewählt aus der Gruppe der Phenylendiaminderivate, z. B. 6PPD, und/oder der Gruppe der Dihydrochinolinderivate, z. B. TMQ. Dadurch wird die Ozon- und Alterungsbeständigkeit derVulkanisate verbessert, wobei die bei diesen Alterungsschutzmitteln sonst übliche deutliche Erhöhung der Mischungstemperatur unter Belastung (Heat Build-Up) und die Erniedrigung des statischen Moduls durch die spezielle Kombination mit dem Kohlenwasserstoffharz und der Fettsäure, dem Salz der Fettsäure oder dem Fettsäurederivat nicht auftritt und sogar zu genau gegensätzlichen Effekten, nämlich der Verringerung des Heat Build-Up und der Erhöhung des statischen Moduls, führt. Besonders bevorzugt werden 1,3 bis 1,7 phr 6PPD und 1,3 bis 1,7 phr TMQ eingesetzt.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der Kautschukmischung für die Laufstreifenbase erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form einer Laufstreifenbase gebracht. Cap- und Basemischung können auch gemeinsam mit Hilfe eines Duplex-Extruders extrudiert werden. Der Laufsteifenrohling wird bei der Herstellung des Fahrzeugluftreifenrohlings wie bekannt ggf. zusammen mit der Cap aufgelegt. Die Laufstreifenbase kann aber auch auf einen Reifenrohling, der bereits alle Reifenteile bis auf die Laufstreifenbase und -cap enthält, in Form eines schmalen Kautschukmischungsstreifens aufgewickelt werden. Nach Fertigstellung des Reifenrohlings wird dieser in einer Vulkanisationsform vulkanisiert.

Die Erfindung soll nun anhand von Vergleichs- und Ausführungsbeispielen, die in den Tabellen 1 und 2 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die Mischungen für die erfindungsgemäßen Reifen sind mit E gekennzeichnet.

Die Mischungsherstellung erfolgte unter üblichen Bedingungen in zwei Stufen in einem Labortangentialmischer. Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften bestimmt, die in der Tabelle 2 aufgelistet sind. Für die Tests an Prüfkörpern wurden folgende Testverfahren angewandt:
- statischer Modul (Spannungswerte) bei 100 und 200 % Dehnung bei Raumtemperatur gemäß DIN 53 504
- Shore-A-Härte bei Raumtemperatur und 70 °C gemäß DIN 53 505
- Heat Build-Up durch Kugelzermürbung nach Martens bei 402 N Last und einer Laufzeit von max. 50000 Zyklen
- dynamischer Speichermodul E' bei 60 °C gemäß DIN 53 513 aus Messung mit konstanter Verformungsamplitude von 0,2 % bei 10 % Verformung in Kompression mit 10 Hz dynamischer Verformungsfrequenz

**Tabelle 1**

| **Bestandteile** | **Einheit** | **1(V)** | **2(V)** | **3(V)** | **4(V)** | **5(V)** | **6(E)** |
|---|---|---|---|---|---|---|---|
| Naturkautschuk | phr | 70 | 70 | 70 | 70 | 70 | 70 |
| BR^{a} | phr | 30 | 30 | 30 | 30 | 30 | 30 |
| Ruß | phr | 70 | 70 | 70 | 70 | 70 | 70 |
| Weichmacheröl | phr | 14,5 | 14,5 | 14,5 | 14,5 | 14,5 | 14,5 |
| Kohlenwasserstoffharz mit einem Erweichungspunkt von ca. 97°C^{b} | phr | - | 2 | - | - | - | 2 |
| Klebharz mit einem Erweichungspunkt von 135 - 150 °C^{c} | phr | 4 | 2 | 4 | 4 | 4 | 2 |
| Verarbeitungshilfsmittel | phr | 2 | 2 | 2 | 2 | 2 | 2 |
| 6PPD | phr | 1 | 1 | 1 | 1,5 | 1,5 | 1,5 |
| TMQ | phr | - | - | - | 1,5 | 1,5 | 1,5 |
| Zinkoxid | phr | 3 | 3 | 3 | 3 | 3 | 3 |
| Stearinsäure | phr | 1 | 1 | 3 | 1 | 3 | 3 |
| Beschleuniger | phr | 3 | 3 | 3 | 3 | 3 | 3 |
| Schwefel | phr | 2 | 2 | 2 | 2 | 2 | 2 |

| | | | | | | | |
|---|---|---|---|---|---|---|---|
| ^{a} High-cis Polybutadien ^{b} aromatisches Kohlenwasserstoffharz, Norsolene^{®}, Sartomer, USA ^{c}Kondensationsprodukt von Butylphenol mit Acetylen, Koresin^{®}, BASF, Deutschland | | | | | | | |

**Tabelle 2**

| **Eigenschaften** | **Einheit** | **1(V)** | **2(V)** | **3(V)** | **4(V)** | **5(V)** | **6(E)** |
|---|---|---|---|---|---|---|---|
| Modul 100 % | MPa | 4,14 | 4,00 | 4,23 | 3,58 | 3,89 | 4,18 |
| Modul 200 % | MPa | 11,55 | 11,35 | 12,04 | 10,16 | 10,74 | 11,63 |
| Härte bei RT | Shore A | 72,47 | 72,10 | 72,80 | 70,90 | 71,70 | 72,70 |
| Härte bei 70 °C | Shore A | 70,43 | 69,90 | 69,40 | 68,60 | 68,50 | 69,70 |
| Heat Build-Up | °C | 100,5 | 97,0 | 96,0 | 109,5 | 108,0 | 88,5 |
| E' bei 60 °C | MPa | 10,934 | 11,87 | 11,314 | 10,966 | 10,687 | 10,561 |

Alle Mischungen der Tabelle 1 weisen eine gute Grünklebrigkeit auf. In den erfindungsgemäßen Mischungen ist das Klebharz Koresin^{®} aus der Mischung 1 zur Hälfte durch das Kohlenwasserstoffharz Norsolene^{®} ersetzt worden.

Aus der Tabelle 2 wird ersichtlich, dass durch Kombination von aromoatischem Kohlenwasserstoffharz mit einem Erweichungspunkt zwischen 85 und 115 °C mit 3 phr Stearinsäure und Alterungsschutzmittel in der rußgefüllten Dienkautschukmischung der statische Modul und der Heat Build-Up in nicht erwartbarer Höhe verbessert werden können.

Insgesamt kann mit den mit E gekennzeichneten Mischungen der Zielkonflikt zwischen Grünklebrigkeit, hohem statischem Modul und niedrigem Heat Build-Up gelöst werden. Bei Fahrzeugluftreifen mit einer Base aus einer solchen Mischung erzielt man eine gute Herstellbarkeit, ein gutes Handling und eine gute Haltbarkeit.

## Patentansprüche

1. Fahrzeugluftreifen mit einem Laufstreifen mit Cap- und Base-Aufbau, wobei die Laufstreifenbase aus zumindest einer mit Schwefel vulkanisierten Kautschukmischung besteht, die
- zumindest einen Dienkautschuk,
- zumindest einen Füllstoff,
- 1 - 4 phr (Gewichtsteile, bezogen auf 100 Gewichtsteile der gesamten Kautschuke in der Mischung) zumindest eines aromatischen Kohlenwasserstoffharzes mit einem Erweichungspunkt (Ring und Kugel gemäß ASTM E 28) zwischen 85 und 115 °C und
- 1,5 - 10 phr zumindest einer Fettsäure und/oder eines Metallsalzes einer Fettsäure und/oder eines Fettsäurederivates enthält.

2. Fahrzeugluftreifen nach Anspruch 1, **dadurch gekennzeichnet, dass** die Kautschukmischung 2 - 4 phr zumindest einer Fettsäure und/oder eines Metallsalzes einer Fettsäure und/oder eines Fettsäurederivates enthält.

3. Fahrzeugluftreifen nach Anspruch 1 oder 2, **dadurch gekennzeichnet, dass** als Fettsäure Stearinsäure eingesetzt wird.

4. Fahrzeugluftreifen nach zumindest einem der vorhergehenden Ansprüche, **dadurch gekennzeichnet, dass** die Kautschukmischung mehr als 2 phr zumindest eines Alterungsschutzmittels ausgewählt aus der Gruppe der Phenylendiaminderivate und/oder der Gruppe der Dihydrochinolinderivate enthält.

5. Fahrzeugluftreifen nach zumindest einem der vorhergehenden Ansprüche, **dadurch gekennzeichnet, dass** die Kautschukmischung 1,3 bis 1,7 phr N-(1,3-Dimethyl)-N'-phenyl-p-phenylendiamin und 1,3 bis 1,7 phr 2,2,4-Trimethyl-1,2-dihydrochinolin enthält.

## Claims

1. Pneumatic vehicle tyre comprising a tread with cap and base structure, the tread base consisting at least of one rubber mixture which is vulcanized with sulphur and contains
- at least one diene rubber,
- at least one filler,
- 1-4 phr (parts by weight, based on 100 parts by weight of the total rubbers in the mixture) of at least one aromatic hydrocarbon resin having a softening point (ring and ball according to ASTM E 28) of between 85 and 115°C and
- 1.5 - 10 phr of at least one fatty acid and/or one metal salt of a fatty acid and/or one fatty acid derivative.

2. Pneumatic vehicle tyre according to Claim 1, **characterized in that** the rubber mixture contains 2-4 phr of at least one fatty acid and/or one metal salt of a fatty acid and/or one fatty acid derivative.

3. Pneumatic vehicle tyre according to Claim 1 or 2, **characterized in that** the fatty acid used is stearic acid.

4. Pneumatic vehicle tyre according to at least one of the preceding claims, **characterized in that** the rubber mixture contains more than 2 phr of at least one antiageing agent selected from the group consisting of the phenylenediamine derivatives and/or the group consisting of the dihydroquinoline derivatives.

5. Pneumatic vehicle tyre according to at least one of the preceding claims, **characterized in that** the rubber mixture contains 1.3 to 1.7 phr of N-(1,3-dimethyl)-N'-phenyl-p-phenylenediamine and 1.3 to 1.7 phr of 2,2,4-trimethyl-1,2-dihydroquinoline.

## Revendications

1. Bandage pneumatique de véhicule qui présente une bande de roulement à structure en base et chapeau, la base de la bande de roulement étant constituée d'au moins un mélange de caoutchouc vulcanisé au soufre qui contient :
- au moins un caoutchouc diène,
- au moins une charge,
- de 1 à 4 phr (parties en poids par rapport à 100 parties en poids de l'ensemble du caoutchouc présent dans le mélange) d'au moins une résine d'hydrocarbure aromatique dont le point d'amollissement (déterminé par anneau et bille selon ASTM E 28) est compris entre 85 et 115° C et
- de 1,5 à 10 phr d'au moins un acide gras et/ou d'un sel métallique d'un acide gras et/ou d'un dérivé d'acide gras.

2. Bandage pneumatique de véhicule selon la revendication 1, **caractérisé en ce que** le mélange de caoutchouc contient de 2 à 4 phr d'au moins un acide gras et/ou d'un sel métallique d'un acide gras et/ou d'un dérivé d'acide gras.

3. Bandage pneumatique pour véhicule selon les revendications 1 ou 2, **caractérisé en ce que** comme acide gras, on utilise l'acide stéarique.

4. Bandage pneumatique pour véhicule selon au moins l'une des revendications précédentes, **caractérisé en ce que** le mélange de caoutchouc contient plus de 2 phr d'au moins un agent de protection contre le vieillissement sélectionné dans l'ensemble constitué des dérivés de phénylènediamine et/ou de l'ensemble des dérivés de dihydroquinoline.

5. Bandage pneumatique pour véhicule selon au moins l'une des revendications précédentes, **caractérisé en ce que** le mélange de caoutchouc contient de 1,3 à 1,7 phr de N-(1,3-diméthyl)-N'-phényl-p-phénylènediamine et de 1,3 à 1,7 phr de 2,2,4-triméthyl-1,2-dihydroquinoline.
